# EUROPEAN PATENT SPECIFICATION

(11) **EP 1 401 735 B1**
(45) Date of publication and mention of the grant of the patent: **30.11.2005**
(21) Application number: 01965448.2
(22) Date of filing: 13.09.2001
(51) Int. Cl.: B65D 85/00

(54) **LAMINA STORAGE DEVICE**
AUFBEWAHRUNGSVORRICHTUNG FÜR PLÄTTCHEN
DISPOSITIF DE STOCKAGE D'ELEMENTS LAMELLAIRES

(30) Priority: 15.09.2000 GB 0022675
(43) Date of publication of application: 31.03.2004
(73) Proprietor: Carling Point Limited, Llanfechain, Powys Sy22 6UJ (GB)
(72) Inventor: MARGETTS, Mark, Geoffrey, Newland, Llanfechain, Powys SY22 6UJ (GB); EATON, Neil, Adrian, Highley WV16 6DQ (GB); BAGNALL, Mark, Daniel, Yate BS37 7LW (GB)
(74) Representative: Powell, Timothy John
(86) International application number: PCT/GB2001/004090
(87) International publication number: WO 2002/022468

(56) References cited:
- GB-A- 2 154 550
- US-A- 4 863 025

## Description

This invention is concerned with lamina storage devices especially lamina storage devices for storing electronically readable media for example smart cards, credit/debit cards, compact disks, digital versatile disks and games disks. For convenience in the description hereof we shall refer to all such laminae as "disks".

Storage devices are needed to protect such disks from abrasion (which may cause reading errors) and extreme flexing (which can cause breakage). A typical known storage device holds a disk at its centre with multiple, shouldered, spring fingers; the disk is removed by depressing the fingers slightly, then lifting the disk while the fingers are still held depressed. These known systems are generally satisfactory when new, if correctly used. Nevertheless, the known systems have some disadvantages amongst which are the following:-
(i) disks may not always be released properly: this can lead to disk damage when the edge of the disk is lifted up whilst the centre is still restrained;
(ii) disks may be damaged because they are not returned to the storage device properly: disks may be either merely placed in position, or not pushed onto the retaining finger sufficiently firmly so that they appear to be held in place when they are not held satisfactorily - in such cases the disks may fall onto the floor either while closing or opening the storage device leading to possible damage;
(ii) releasing a disk from the known devices and holding it effectively depends very much on the dexterity of the user: for example a disk may "hang" on the centre if it is compressed such that highpoints catch on the edge of the disk hole; or if the case is held too firmly, it may distort allowing the disk to be gripped and pulled even though the lock is not released;
(iv) commonly, in using the known systems, a storage device will be removed from its shelf, opened, and the disk removed with one hand while the case is held with the other hand - this increases the risk of the disk catching and being damaged whilst attempting to remove it from the storage device;
(v) in many instances light pressure at the centre of the faces of a closed storage device can release the disk from its central retainer - this may only become apparent when the storage device is opened and the disk falls out;
(vi) in the known devices the catch which retains the storage device in a closed condition is produced by a moulding process which leaves holes that extend through the storage device outer surface, thereby necessitating an additional component, for example a wrapping film, to cover the hole and exclude dirt thereby increasing manufacturing costs.

One of the various objects of the present invention is to provide an improved disk storage device.

Another of the various objectives of the present invention is to provide a disk storage device in which the risk of damage to the disk as it is removed from the storage device is reduced in comparison with commonly available storage devices.

GB 2154550 discloses a container having a crescent shaped holder intended to receive a disk and grip the disk lightly. The lateral holding arms of GB 2154550 are joined by a continuous web spanning therebetween without any resilient play, while allowing unencumbered disk removal therefrom. In other words, the side limbs of the crescent shaped holder are rigid. There is no disclosure in GB 2154550 of projections into the grooves at the end of the arms that are spaced from the spine by more than the effective radius of the lamina, and that are spaced apart by a distance less than the effective diameter of the lamina.

In one aspect the invention may be considered to provide a lamina storage device comprising a spine; first and second leaves hingedly secured to the spine to permit hinging movement of the leaves between a closed position of the device in which the leaves and spine define a hollow interior of the device and an open position for insertion and removal of a lamina to be stored; and a lamina support carried by the spine, the lamina support comprising a pair of resilient arms projecting when the device is in the closed position from the spine into the hollow interior of the device between the leaves, each arm having a groove extending therealong and the grooves facing one another and into the hollow interior, the grooves of the arms being spaced apart a distance suitable for receiving edge portions of a lamina to be stored in the grooves the distance corresponding to the effective lamina diameter of a lamina to be stored therein, characterised in the arms having a length greater than the effective radius of a lamina to be stored and each arm being provided at its end portion remote from the spine with a projection into the groove spaced from the spine by a distance greater than the effective radius of the lamina to be received between the arms, the projections of the arms facing one another and being spaced apart by a distance less than the effective diameter of a lamina to be stored.

The "effective diameter of the lamina" is the span of the lamina that passes between the aforesaid arms. "Effective radius" is to be construed accordingly. The terms "effective diameter" and "effective radius" are intended to embrace use of the device of the invention to store disks; and non-circular laminae such as credit and smart cards.

Preferably at least one of the leaves of a device in accordance with the invention comprises a skirt portion projecting therefrom which in the closed position of the device engages the other of the leaves and encloses at least part of the arms of the lamina support.

In a preferred device in accordance with the invention both of the leaves comprise skirt portions which abut one another in the closed position of the device and enclose the arms of the lamina support, the abutting skirt portions of the leaves defining a wall that includes a lock for locking the leaves in the closed position. The lock of the preferred device comprises an elongate recess and a detachable locking member wherein the recess is defined by wall portions secured on the respective leaves, that are spaced from the abutting skirt portions of the leaves whereby in the closed position the wall portions lie adjacent one another to define, with the skirt portions, the recess, each said wall portion including a plurality of slots and the locking member including a plurality of depressible teeth and being insertable into the recess such that slots in both the wall portions are engaged by teeth on the locking member to secure the locking member in the recess, tabs on the device engaging a channel in the locking member to prevent access thereto.

In the preferred device the locking member is removable on simultaneous depression of the teeth out of their associated slots to permit removal of the locking member from the recess. In this preferred device the wall portions each include an opening formed therein that permits insertion of a thumb or finger to assist opening of the leaves when the locking member is absent. In the preferred device the openings are located so as to defme a single continuous opening in the wall portions when the leaves are in the closed position. In the preferred device a locking member is slideably receivable in the recess.

A preferred but optional lock for locking the leaves of a storage device in accordance with the invention in the closed position is described in our co-pending PCT Patent Application, Publication No. WO 00/17877 (PCT Patent Application No. PCT/GB99/03084); reference is directed to this patent application for further information relating to the lock.

Preferably in a device in accordance with the invention each groove of the lamina support has a truncated V-shaped cross section. With a suitable selection of angle of V use of a truncated V-shaped groove can ensure that the faces of the lamina eg. disk in the support only touch the arms at the extreme outer edge portion of the lamina eg. disk where there is no functioning part, thereby minimising the risk that working surfaces of the disk may be damaged when it is inserted into the disk support.

Preferably in a lamina support device in accordance with the invention the distance between the bottoms of the grooves when no lamina is inserted in the support, at the positions where the arms make a tangent to a lamina in the support, is slightly less than the effective diameter of the lamina: this can minimise the risk of the disk rattling to and fro between the arms when the disk storage device is carried with a disk in place.

Preferably a lamina support device in accordance with the invention comprises a projection from at least one of the leaves which, in a closed position of the device, projects into the hollow interior spaced from the spine by a distance greater than the effective diameter of a lamina to be stored: this projection is intended to minimise the risk of the lamina leaving the lamina support in the event of the support device being dropped on to its opening edge portion. The presence of the projection from at least one of the leaves across the hollow interior of the device remote from the hinge can limit the disk movement away from the spine thereby retaining it in the support.

In a device in accordance with the invention the arms of the lamina support may comprise a plurality of opposed grooves for the storage of a plurality of lamina.

In a device in accordance with the invention the spine may comprise a plurality of lamina supports.

Preferably the spine and arms of a device in accordance with the invention are moulded as an integral part; more preferably the spine, arms and leaves are integrally moulded, for example by an injection moulding.

In another aspect the invention may be considered to provide an assembly comprising a lamina storage device in accordance with the invention and a lamina mounted in the lamina support with edge portions received in the opposed grooves and retained in the grooves by the facing projections of the arms.

There now follows a detailed description to be read with reference to the accompanying drawings of two disk storage devices, namely disk cases, embodying the invention. It will be realised that these cases have been selected for description to illustrate the invention by way of example.

In the accompanying drawings:-
Figure 1 is a plan view of a first illustrative case in an open position;
Figure 2 is a perspective view of the first illustrative case in an open position, from a different angle;

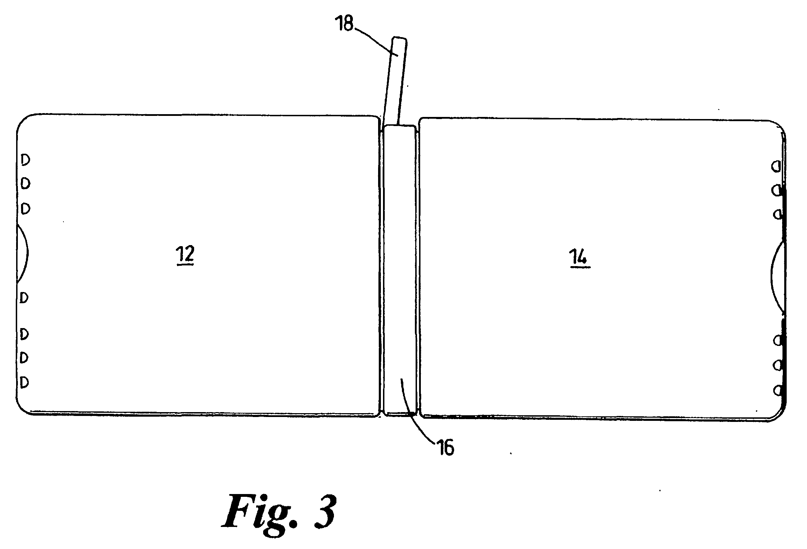

Figure 3 is a perspective view of the first illustrative case in its open position showing an outer surface of the device;
Figure 4 is an end view of the case in an open position showing a disk mounted in the disk support;

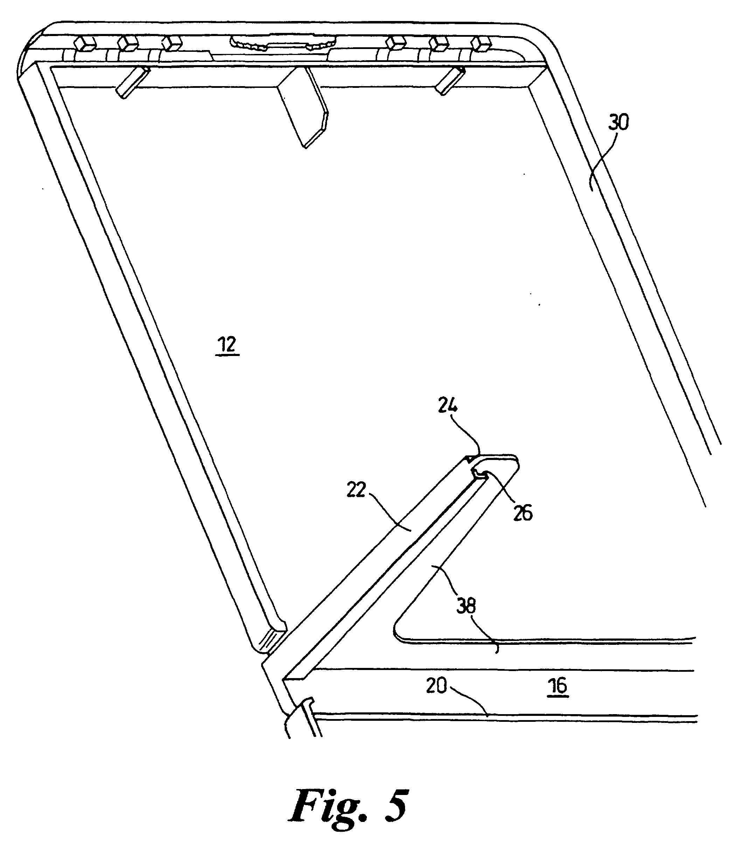

Figure 5 is a perspective view of part of the first illustrative case;
Figure 6 is a perspective view of the first illustrative case in a closed position showing part of the lock ;
Figure 7 is a perspective view of the first illustrative case showing a locking member;
Figure 8 is a perspective view of the first illustrative case in a closed position with the locking member in place;
Figure 9 is a diagrammatic perspective view showing a second illustrative case partially open;
Figure 10 is a view in section showing a disk mounted in the second illustrative case with the case in its closed position;
Figure 11 is a view with part broken away showing a groove of an arm of the illustrative case;
Figure 12 is a view with part broken away showing a disk about to be introduced into the disk support;
Figure 13 is a view as Figure 12 showing the arm of the disk support flexing as the disk is introduced; and
Figure 14 is a view as Figure 12 showing the disk retained in the case.

In the accompanying drawings of the illustrative cases, like numbers indicate like parts.

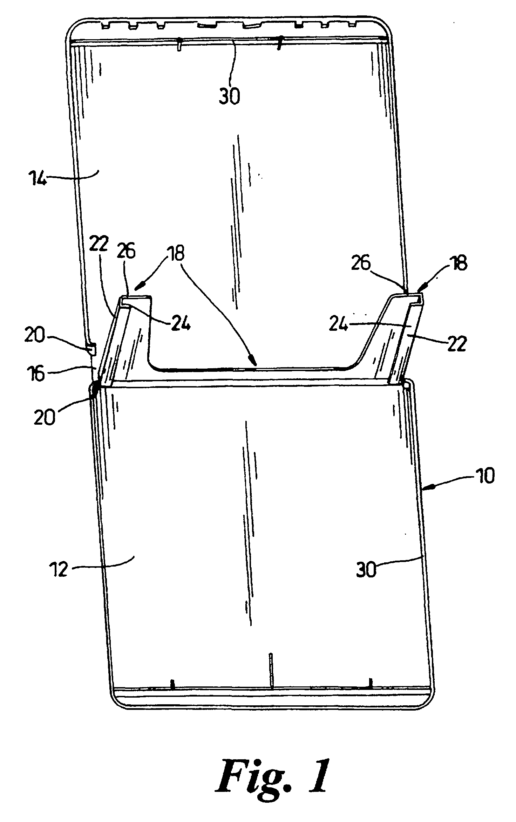

The illustrative disk storage devices, namely the disk storage cases 10 comprise a first leaf 12 and a second leaf 14 hingedly secured to a spine 16 of the cases. A disk support 18 is carried by the spine 16. The cases 10 are injection moulded integrally from a suitable plastics material, hinge portions 20 by which the leaves 12,14 are secured to the spine 16 being likewise integrally moulded. One suitable plastics material from which the cases 10 may be moulded is polypropylene but other plastics material of appropriate characteristics may be used. The hinges 20 permit hinging movement of the leaves 12, 14 between a closed position of the cases 10 in which the leaves and spine define the hollow interior of the cases, and an open position (in which the first illustrative case is shown in Figure 1) for insertion and removal of a disk to be stored, to the disk support 18.

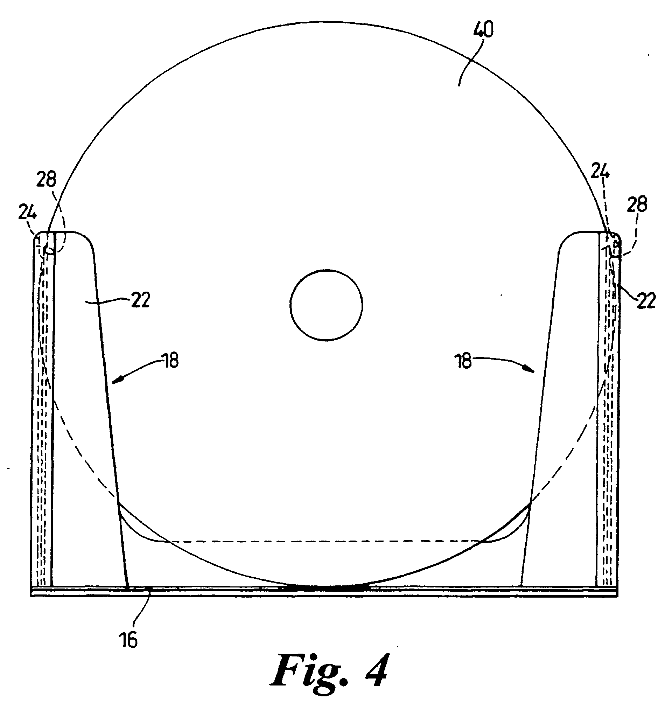

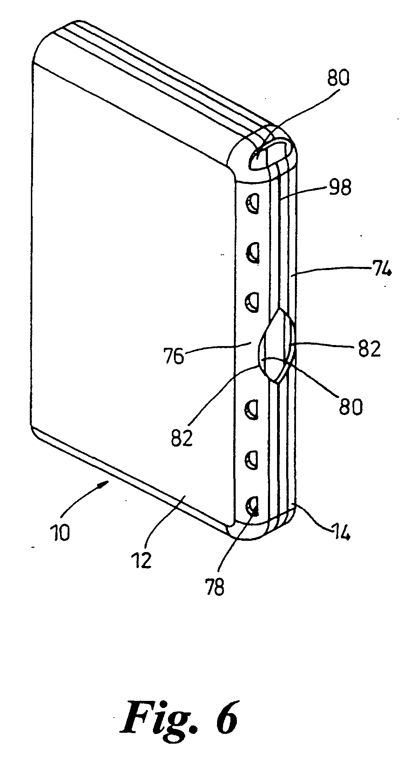

The disk supports 18 of the cases each comprise a pair of resilient arms 22. The arms 22 of the illustrative cases 10 each comprise first and second grooves 24,26 extending therealong; the first grooves 24 face one another and the second grooves 26 face one another and the grooves 24,26 face inwardly into the hollow interior of the case. The first grooves 24 and the second grooves 26 of the arms are spaced apart a distance suitable for receiving edge portions of a disk to be stored, for example a compact disk, in the grooves 24,26. The illustrative cases can store two disks, one disk in the grooves 24 and the other in the grooves 26. The arms 22 (and thus the grooves 24,26) have a length greater than the radius of a disk to be stored in the illustrative cases 10. Each arm 22 is provided at its end portion remote from the spine 16 with a projection 28 into each of the grooves, each of the projections 28 (see Figure 6) being spaced from the spine 16 by a distance greater than the radius of the disk to be stored. The projections 28 into the grooves 24 face one another and the projections 28 into the grooves 26 face one another. The projections 28 into the grooves 24 are spaced apart by a distance less than the diameter of a disk to be stored and likewise the projections 28 into the groove 26 are spaced apart by a distance less than the diameter of a disk to be stored. As can be seen viewing Figure 4 the grooves 24,26 extend away from the spine 16 beyond the projections 28.

In the illustrative cases 10, the channels 24,26 each have a truncated V-shaped cross section. The distance between the bottoms of the grooves 24 when no disk is present in the support 18, at the position where the arms 22 make a tangent to a disk when stored in the support 18, is slightly less than the diameter of the disk. This ensures that the arms engage the edges of the disk with a light pressure to prevent it rattling between the arms.

Each of the leaves 12,14 of the first illustrative case comprises a skirt portion 30 which extends around all three sides of the respective leaf 12,14 except along the side along which the hinge 20 extends. The skirt portions 30 of the leaves 12,14 engage one another and enclose the arms 22 of the disk support 18 when the case is in the closed position. The abutting skirt portions 30 define a wall which includes a lock for locking the leaves 12,14 in the closed position. An opening edge 98 remote from the spine 16 of the illustrative case 10 comprises wall portions 76,74 moulded integrally with the leaves 12,14 but spaced from the abutting skirt portions 30 of the leaves. In the closed position the wall portions 74,76 abut each other and form, with the adjacent skirt portions 30 a recess, namely a hollow section 80. Each of the wall portions 74,64 comprises a number of slots 78 and an opening cutout portion 82 to provide easy access for a thumb or finger when opening the case.

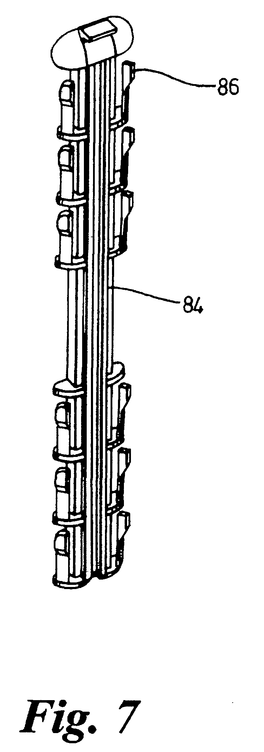

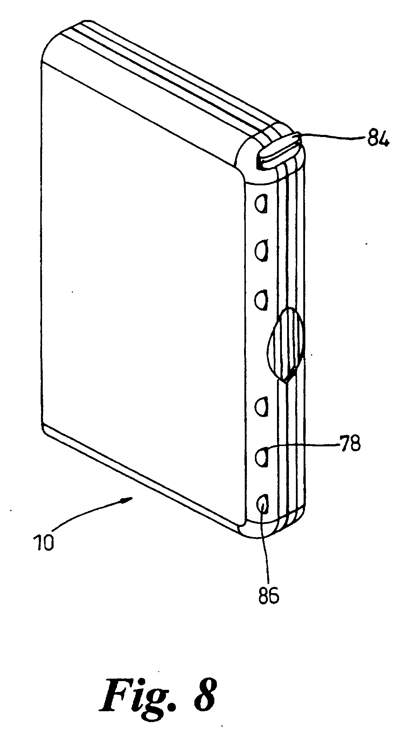

The hollow section 80 is formed to receive a locking member 84 as shown in Figure 7. The locking member 84 is formed with a number of teeth 86. In use the locking member 84 is slid into the hollow section 80 from one end thereof, leaving a small part projecting (see Figure 8). Teeth 86 of the locking member 84 are engaged in corresponding slots 78 of the wall portions 74,76. Tabs on the non-visible part of the case engage a channel on the locking member 84 to ensure that the case 10 remains in its closed position. The locking member 84 can only be removed readily from the recess by depressing all of the teeth 86 simultaneously disengaging them from their slots and sliding the locking member 84 from the section 80; to release the teeth 86 in a convenient fashion requires a suitable tool as described in detail in our aforesaid co-pending PCT patent application.

The first illustrative case comprises a projection 32 from the leaf 12 which in the closed position of the case 10 projects into the hollow interior with an edge portion 34 of the projection 32 adjacent and substantially engaging the second leaf 14. A second edge portion 36 of the projection 32 is spaced from the spine 16 by a distance slightly greater than the diameter of a disk to be stored. As can be seen viewing the drawings, the arms 22 comprise a web 38 which provides one wall of each of the grooves 24,26 between the grooves 24,26; as can be seen viewing the drawings, the web 38 also extends along the spine 16 of the cases 10.

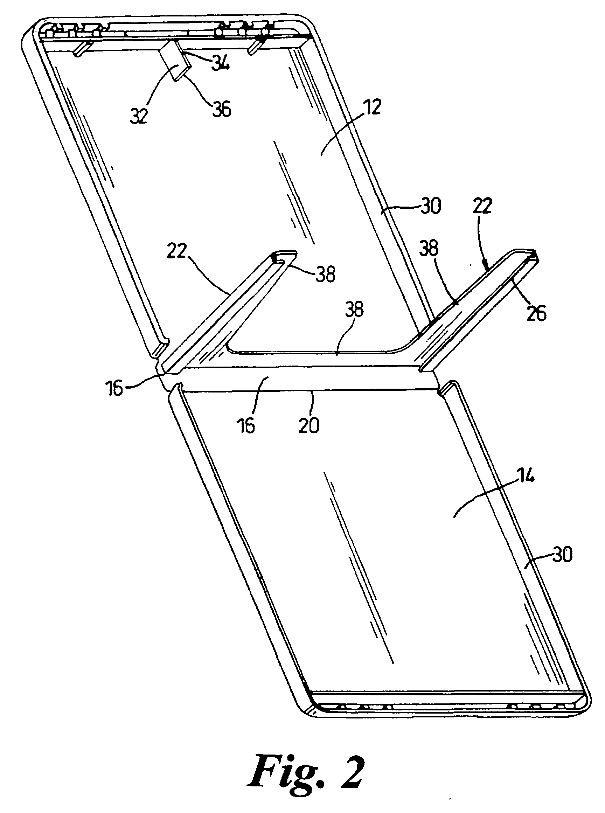

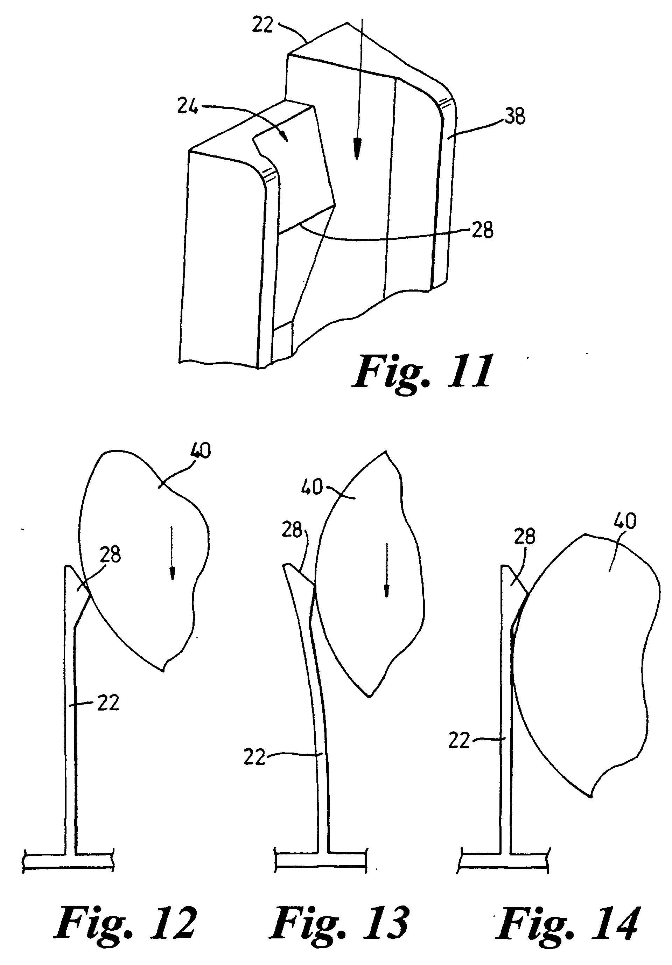

In the use of the illustrative cases 10 to store a disk 40, the case is first placed in the open position in which the first illustrative case is shown in Figures 1 and 2 and a disk is slid into the grooves 24. The leading end portions of the grooves 24 in each arm 22 remote from the hinge 16 act as a fair lead to guide the disk along the grooves. As the disk is inserted into the grooves 24, the outermost edge of the disk engages the opposed projections 28 and the arms 22 are urged slightly apart (see Figure 13) to allow the diameter of the disk 40 to pass along the grooves. The disk is inserted until the leading edge of the disk engages the spine 16, at which time the arms 22 have flexed back to the position to which they are shown in Figures 4 and 14 with the outermost edge portion of the disk 40 lightly engaged by the arms. The case 10 may then be closed and locked as described above in the closed position in which it is shown in Figures 6-8. Should the case be inadvertently dropped on the locked edge of the case, the projection 32 will engage the edge of the disk and prevent it being ejected from the grooves. Normally the projections 28 will be sufficient to retain the disk 40 firmly in place in the grooves 24. If it is desired to store a second disk in the case, then a similar procedure is utilised with the second disk being introduced into the grooves 26.

When the first illustrative case is in the closed position the skirt portions 30 which enclose the arms 22 prevent the arms being urged apart, thereby militating against accidental escape of a disk from the disk support 18.

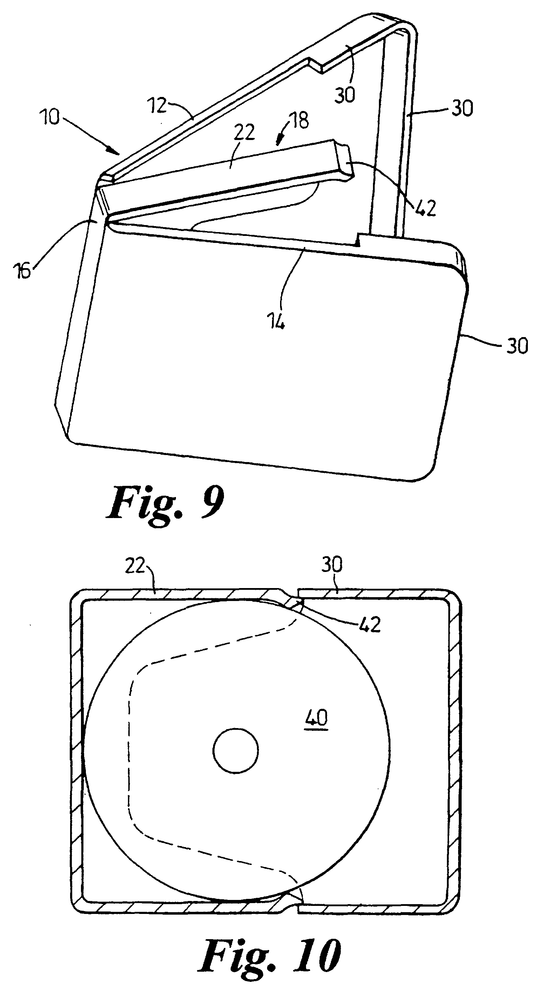

The second illustrative case has a projection 42 from the end of the arms 22 which, when the second illustrative case is closed, is engaged by part of the skirt 30 (see Figure 10) to prevent the arms 22 being urged apart.

When it is desired to remove a disk from one of the illustrative cases, the first illustrative case is opened by withdrawal of the locking member as discussed in our aforesaid PCT patent application or the second illustrative case as shown in Figure 9 and the leaves 12,14 moved to the open position in which the leaves of the first illustrative case are shown in Figure 2. The disk 40 may then be grasped and slid lengthwise of the grooves 24 to remove it from the disk support 18, the edges of the disk 40 engaging the projections 28 and flexing the arms 22 apart as the disk is withdrawn.

The disk support 18 of the illustrative cases does not rely on the grip of the arms provided by any tension in the arms to retain the disk in place - the disk is retained in the grooves by the projections 28. Thus any stress relaxation which may occur in the arms is not likely to be sufficient to render the arms 22 inoperative for their intended purpose.

As can be seen viewing the drawings, the disk is presented to the user free from each of the leaves 12,14 of the case, affording good access to the disk for removal. Furthermore, the means of removal, merely sliding the disk 40 out of the support 18, is simple and self-evident. Likewise when replacing the disk, correct replacement is clear, as the disk can be seen entering the grooves 24.

The construction of the illustrative cases provides a continuous external surface, not broken by tooling holes, when the cases 10 are in the closed position, the surface including the leaves 12, 14, skirt portions 30 and spine 16. This produces a more effective seal than many previously known disk cases and reduces the likelihood that a secondary cover need be applied around the case.

In a case in accordance with the invention generally similar to the illustrative cases, multiple disks may be stored by providing a plurality of disk supports similar to the disk support 18. Each of the disk supports may be provided on a separate spine portion hingedly connected to adjacent spine portions so that the disk support may be fanned apart as the case is opened.

Although the embodiment of Figures 6 to 8 illustrates one arrangement for locking a storage device according to the invention, those skilled in the art will recognise that numerous other, equivalent locking arrangements are possible. Another possibility is to omit the locking arrangement and include eg. a simple, resilient detent for holding the leaves of the device together in use.

Also, it is possible to apply in-mould labelling decoration to the storage device of the invention, for example using a method as disclosed in published PCT application number WO00/30827. Use of such a method to decorate the device is within the scope of the invention.

## Claims

1. A lamina storage device (10) comprising a spine (16); first and second leaves (12,14) hingedly (20) secured to the spine (16) to permit hinging movement of the leaves (12,14) between a closed position of the device in which the leaves (12,14) and spine (16) define a hollow interior of the device (10) and an open position for insertion and removal of a lamina (40) to be stored; and a lamina support (18) carried by the spine (16), the lamina support (18) comprising a pair of resilient arms (22) projecting when the device (10) is in the closed position from the spine (16) into the hollow interior of the device between the leaves (12,14), each arm (22) having a groove (24,26) extending therealong and the grooves (24,26) facing one another and into the hollow interior, the grooves (24,26) of the arms being spaced apart a distance suitable for receiving edge portions of a lamina (40) to be stored in the grooves (24,26) the distance corresponding to the effective lamina diameter of a lamina to be stored therein, **characterised in** the arms (22) having a length greater than the effective radius of a lamina (40) to be stored and each arm (22) being provided at its end portion remote from the spine (16) with a projection (28) into the groove (24,26) spaced from the spine (16) by a distance greater than the effective radius of the lamina (40) to be received between the arms (22), the projections (28) of the arms facing one another and being spaced apart by a distance less than the effective diameter of a lamina (40) to be stored.

2. A device according to Claim 1 wherein at least one of the leaves (12,14) comprises a skirt portion (30) projecting therefrom which in the closed position of the device (10) engages the other of the leaves (14,12) and encloses at least part of the arms (22) of the lamina support (18).

3. A device according to either one of Claims 1 and 2 wherein both of the leaves (12,14) comprise skirt portions (30) which abut one another in the closed position of the device (10) and enclose the arms (22) of the lamina support (18), the abutting skirt portions (30) of the leaves (12,14) defining a wall that includes a lock for locking the leaves (12,14) in the closed position.

4. A device (10) according to Claim 3 wherein the lock comprises an elongate recess (80) and a detachable locking member (84) wherein the recess is defined by wall portions (76,74) secured on the respective leaves (12,14), that are spaced from the abutting skirt portions (30) of the leaves (12,14) whereby in the closed position the wall portions (76,74) lie adjacent one another to define, with the skirt portions (30), the recess (80), each said wall portion (76,74) including a plurality of slots (78) and the locking member (84) including a plurality of depressible teeth (86) and being insertable into the recess (80) such that slots (78) in both the wall portions (76,74) are engaged by teeth (86) on the locking member (84) to secure the locking member (84) in the recess (80), tabs on the device (10) engaging a channel in the locking member (84) to prevent access thereto.

5. A device (10) according to Claim 4 wherein the locking member (84) is removable on simultaneous depression of the teeth (86) out of their associated slots to permit removal of the locking member (84) from the recess (80).

6. A device (10) according to Claim 4 or Claim 5 wherein the wall portions (76,74) each include formed therein an opening (82) that permits insertion of a thumb or finger to assist opening of the leaves (12,14) when the locking member (84) is absent.

7. A device (10) according to Claim 6 wherein the openings (82) are located so as to define a single, continuous opening in the wall portions (76,74) when the leaves (12,14) are in the closed position.

8. A device (10) according to any one of Claims 4 to 7 wherein the locking member (84) is slideably receivable in the recess (80).

9. A device (10) according to any one of the preceding claims wherein each channel has a truncated V-shape cross-section.

10. A device (10) according to any one of the preceding claims wherein the distance between the bottoms of the grooves (24,26) when no lamina (40) is inserted in the support (18), at the positions where the arms (22) make a tangent to a lamina (40) in the support (18), is slightly less than the effective diameter of the lamina (40).

11. A device (10) according to any one of the preceding claims comprising a projection (28) from at least one of the leaves (12,14) which in the closed position of the device (10) projects into the hollow interior spaced from the spine (16) by a distance greater than the effective diameter of a lamina (40) to be stored.

12. A device (10) according to any one of the preceding claims wherein the arms (22) of the lamina support (18) comprises a plurality of opposed grooves (24,26) for storage of a plurality of laminae (40).

13. A device (10) according to any one of the preceding claims wherein the spine (16) comprises a plurality of lamina supports (18).

14. A device (10) according to any one of the preceding claims wherein the spine (16) and arms (22) are moulded as an integral part.

15. A device (10) according to any one of the preceding claims wherein the spine (16), arms (22) and leaves (12,14) are integrally moulded.

16. An assembly comprising a disk storage device (10) according to any one of the preceding claims and a lamina (40) mounted in the lamina support (18) with edge portions received in the opposed grooves (24,26) and retained in the grooves (24,26) by the opposed projections (28).

## Patentansprüche

1. Speichervorrichtung (10) für plättchenförmige Körper, die folgende Bestandteile umfasst: ein Rückenelement (16), erste und zweite Klappenelemente (12, 14), die an dem Rückenelement (16) mit Hilfe von Gelenken (20) befestigt sind, um eine Schwenkbewegung der Klappenelemente (12, 14) zwischen einer geschlossenen Stellung der Vorrichtung, in der die Klappenelemente (12, 14) und das Rückenelement (16) einen hohlen Innenraum der Vorrichtung (10) umschließen, und einer offenen Stellung für das Einführen oder Herausnehmen eines zu speichernden plättchenförmigen Körpers (40) zu ermöglichen, sowie einen Träger (18) für plättchenförmige Körper, der vom Rückenelement (16) getragen wird, wobei der Träger (18) für plättchenförmige Körper zwei elastische Arme (22) umfasst, die dann, wenn sich die Vorrichtung (10) in der geschlossenen Stellung befindet, vom Rückenelement (16) in den hohlen Innenraum der Vorrichtung zwischen den Klappenelementen (12, 14) hinein vorstehen, wobei jeder Arm (22) eine Rille (24, 26) aufweist, die sich in seiner Längsrichtung erstreckt, wobei die Rillen (24, 26) einander gegenüberliegen und sich zum hohlen Innenraum hin öffnen, und wobei die Rillen (24, 26) der Arme einen Abstand aufweisen, der für die Aufnahme von Randbereichen eines in den Rillen (24, 26) zu speichernden, plättchenförmigen Körpers (40) geeignet ist, wobei dieser Abstand dem effektiven Plättchendurchmesser eines zu speichernden plättchenförmigen Körpers entspricht, **dadurch gekennzeichnet, dass** die Arme (22) eine Länge besitzen, die größer als der effektive Radius eines zu speichernden plättchenförmigen Körpers (40) ist, und dass jeder Arm (22) an seinem vom Rückenelement (16) entfernt liegenden Endteil mit einem in die Rillen (24, 26) hineinragenden Vorsprung (28) versehen ist, der vom Rückenelement (16) einen Abstand besitzt, der größer ist, als der effektive Radius eines plättchenförmigen Körpers (40), der zwischen den Armen (22) aufgenommen werden soll, wobei die Vorsprünge (28) der Arme aufeinander zuweisen und voneinander einen Abstand besitzen, der kleiner ist als der effektive Durchmesser eines zu speichernden plättchenförmigen Körpers (40).

2. Vorrichtung nach Anspruch 1, bei der wenigstens eines der Klappenelemente (12, 14) einen Schürzenteil (30) aufweist, der von ihm absteht und in der geschlossenen Stellung der Vorrichtung (10) mit dem anderen Klappenelement (14, 12) in Eingriff tritt und zumindest einen Teil der Arme (22) des Trägers (18) für plättchenförmige Körper umschließt.

3. Vorrichtung nach Anspruch 1 oder 2, bei der beide Klappenelemente (12, 14) einen Schürzenteil (30) umfassen, wobei diese Schürzenteile in der geschlossenen Stellung der Vorrichtung (10) aneinander anstoßen und die Arme (22) des Trägers (18) für plättchenförmige Körper umschließen, wobei die aneinander anstoßenden Schürzenteile (30) der Klappenelemente (12, 14) eine Wand bilden, die eine Verriegelung zum Verriegeln der Klappenelemente (12, 14) in der geschlossenen Stellung umfasst.

4. Vorrichtung (10) nach Anspruch 3, bei der die Verriegelung eine langgestreckte Vertiefung (80) und ein lösbares Verriegelungselement (84) umfasst, wobei die Vertiefung von Wandteilen (76, 74) begrenzt wird, die an den entsprechenden Klappenelementen (12, 14) befestigt sind, die einen Abstand von den aneinander anstoßenden Schürzenteilen (30) der Klappenelemente (12, 14) aufweisen, wobei in der geschlossenen Stellung die Wandteile (76, 74) einander benachbart liegen, um mit den Schürzenteilen (30) die Vertiefung (80) zu umschließen, wobei jeder dieser Wandteile (76, 74) eine Vielzahl von Schlitzen (78) aufweist, und wobei das Verriegelungselement (84) eine Vielzahl von niederdrückbaren Zähnen (86) besitzt und in die Vertiefung (80) so einführbar ist, dass die Zähne (86) am Verriegelungselement (84) mit Schlitzen (78) in beiden Wandteilen (76, 74) in Eingriff treten, um das Verriegelungselement (84) in der Vertiefung (80) zu sichern, wobei Nasen an der Vorrichtung (10) mit einem Kanal in dem Verriegelungselement (84) zur Verhinderung eines Zuganges in Eingriff treten.

5. Vorrichtung (10) nach Anspruch 4, bei der das Verriegelungselement (84) durch ein gleichzeitiges Herausdrücken der Zähne (86) aus ihren zugehörigen Schlitzen entfernbar ist, wodurch ein Entfernen des Verriegelungselementes (84) aus der Vertiefung (80) ermöglicht wird.

6. Vorrichtung (10) nach Anspruch 4 oder 5, bei der jeder der Wandteile (76, 74) eine in ihm ausgebildete Öffnung (82) aufweist, die das Einführen eines Daumens oder Fingers-ermöglicht, um das Öffnen der Klappenelemente (12, 14) zu erleichtern, wenn sich das Verriegelungselement (84) nicht an seinem Platz befindet.

7. Vorrichtung (10) nach Anspruch 6, bei der die Öffnungen (82) so angeordnet sind, dass sie eine einzige, durchgehende Öffnung in den Wandteilen (76, 74) bilden, wenn sich die Klappenelemente (12, 14) in der geschlossenen Stellung befinden.

8. Vorrichtung (10) nach einem der Ansprüche 4 bis 7, bei der das Verriegelungselement (84) in verschieblicher Weise in der Vertiefung (80) aufnehmbar ist.

9. Vorrichtung (10) nach einem der vorhergehenden Ansprüche, bei der jeder Kanal einen stumpf V-förmigen Querschnitt besitzt.

10. Vorrichtung (10) nach einem der vorhergehenden Ansprüche, bei der der Abstand zwischen den Böden der Rillen (24, 26) dann, wenn kein plättchenförmiger Körper (40) in den Träger (18) eingeschoben ist, an den Stellen, an denen die Arme (22) eine Tangente an einen in dem Träger (18) befindlichen plättchenförmigen Körper (40) bilden, geringfügig kleiner ist, als der effektive Durchmesser des plättchenförmigen Körpers (40).

11. Vorrichtung (10) nach einem der vorhergehenden Ansprüche, die einen von wenigstens einem der Klappenelemente (12, 14) abstehenden Vorsprung (28) aufweist, der in der geschlossenen Stellung der Vorrichtung (10) in den hohlen Innenraum vorsteht und vom Rückenelement (16) einen Abstand aufweist, der größer ist, als der effektive Durchmesser eines zu speichernden plättchenförmigen Körpers (40).

12. Vorrichtung (10) nach einem der vorhergehenden Ansprüche, bei der die Arme (22) des Trägers (18) für plättchenförmige Körper eine Vielzahl von einander gegenüberliegenden Rillen (24, 26) zur Speicherung einer Vielzahl von plättchenförmigen Körpern (40) aufweisen.

13. Vorrichtung (10) nach einem der vorhergehenden Ansprüche, bei der das Rückenelement (16) eine Vielzahl von Trägern (18) für plättchenförmige Körper aufweist.

14. Vorrichtung (10) nach einem der vorhergehenden Ansprüche, bei der das Rückenelement (16) und die Arme (22) einstückig ausgebildet sind.

15. Vorrichtung (10) nach einem der vorhergehenden Ansprüche, bei der das Rückenelement (16), die Arme (22) und die Klappenelemente (12, 14) einstückig ausgebildet sind.

16. Baueinheit, die eine Scheiben-Speichereinrichtung (10) nach einem der vorhergehenden Ansprüche und einen in dem Träger (18) für plättchenförmige Körper eingebrachten plättchenförmigen Körper (40) umfasst, dessen Randteile in den einander gegenüberliegenden Rillen (24, 26) aufgenommen sind und in den Rillen (24, 26) durch die einander gegenüberliegenden Vorsprünge (28) festgehalten wird.

## Revendications

1. Dispositif de stockage d'éléments lamellaires (10) comprenant un dos (16) ; des première et seconde feuilles (12, 14) fixées de manière articulée (20) au dos (16) pour permettre un mouvement articulé des feuilles (12, 14) entre une position fermée du dispositif dans lequel les feuilles (12, 14) et le dos (16) définissent un intérieur creux du dispositif (10) et une position ouverte pour une insertion et un retrait d'un élément lamellaire (40) à stocker ; et un support d'éléments lamellaires (18) porté par le dos (16) le support d'éléments lamellaires (18) comprenant une paire de bras résilients (22) faisant saillie, lorsque le dispositif (10) est dans la position fermée, à partir du dos (16) dans l'intérieur creux du dispositif entre les feuilles (12, 14), chaque bras (22) ayant une rainure (24, 26) s'étendant en longueur et les rainures (24, 26) étant en regard l'une de l'autre et dans l'intérieur creux, les rainures (24, 26) des bras étant espacées d'une distance appropriée pour recevoir des portions de bord d'un élément lamellaire (40) à stocker dans les rainures (24, 26) la distance correspondant au diamètre efficace d'élément lamellaire d'un élément lamellaire à y stocker, **caractérisé en ce que** les bras (22) ont une longueur plus grande que le rayon efficace d'un élément lamellaire (40) à stocker et chaque bras (22) est doté au niveau de sa portion d'extrémité éloignée du dos (16) d'une saillie (28) dans la rainure (24, 26) espacée du dos (16) d'une distance plus grande que le rayon efficace de l'élément lamellaire (40) à recevoir entre les bras (22), les saillies (28) des bras étant en regard l'une de l'autre et étant espacées d'une distance inférieure au diamètre efficace d'un élément lamellaire (40) à stocker.

2. Dispositif selon la revendication 1, dans lequel au moins l'une des feuilles (12, 14) comprend une portion de bandeau (30) faisant saillie à partir de celle-ci qui, dans la position fermée du dispositif (10), engage l'autre des feuilles (14, 12) et enferme au moins une partie des bras (22) du support d'éléments lamellaires (18).

3. Dispositif selon l'une quelconque des revendications 1 et 2, dans lequel les deux feuilles (12, 14) comprennent des portions de bandeau (30) qui viennent en butée l'une contre l'autre dans la position fermée du dispositif (10) et enferment les bras (22) du support d'éléments lamellaires (18), les portions de bandeau (30) en butée des feuilles (12, 14) définissant une paroi qui comprend un verrou destiné à verrouiller les feuilles (12, 14) en position fermée.

4. Dispositif (10) selon la revendication 3, dans lequel le verrou comprend un évidement allongé (80) et un organe de verrouillage détachable (84) dans lequel l'évidement est défini par des portions de paroi (76, 74) fixées sur les feuilles respectives (12, 14), qui sont espacées des portions de bandeau (30) en butée des feuilles (12, 14), moyennant quoi dans la position fermée, les portions de paroi (76, 74) se trouvent adjacente l'une de l'autre pour définir, avec les portions de bandeau (30), l'évidement (80), chacune desdites portions de paroi (76, 74) comprenant une pluralité de fentes (78) et l'organe de verrouillage (84) comprenant une pluralité de dents enfonçables (86) et pouvant être insérées dans l'évidement (80) de telle sorte que les fentes (78) dans les deux portions de paroi (76, 74) sont engagées par les dents (86) sur l'organe de verrouillage (84) pour fixer l'organe de verrouillage (84) dans l'évidement (80), des pattes sur le dispositif (10) engageant un canal dans l'organe de verrouillage (84) pour en empêcher l'accès.

5. Dispositif (10) selon la revendication 4, dans lequel l'organe de verrouillage (84) est amovible lors de l'enfoncement simultané des dents (86) hors de leurs fentes associées pour permettre le retrait de l'organe de verrouillage (84) de l'évidement (80).

6. Dispositif (10) selon la revendication 4 ou la revendication 5, dans lequel les portions de paroi (76, 74) comportent chacune une ouverture (82) qui y est formée et qui permet l'insertion d'un pouce ou d'un doigt pour aider à l'ouverture des feuilles (12, 14) lorsque l'organe de verrouillage (84) est absent.

7. Dispositif (10) selon la revendication 6, dans lequel les ouvertures (82) sont situées de façon à définir une ouverture unique continue dans les portions de paroi (76, 74) lorsque les feuilles (12, 14) sont en position fermée.

8. Dispositif (10) selon l'une quelconque des revendications 4 à 7, dans lequel l'organe de verrouillage (84) peut être reçu avec faculté de coulissement dans l'évidement (80).

9. Dispositif (10) selon l'une quelconque des revendications précédentes, dans lequel chaque canal a une section transversale en forme de V tronqué.

10. Dispositif (10) selon l'une quelconque des revendications précédentes, dans lequel la distance entre les fonds des rainures (24, 26) lorsque aucun élément lamellaire (40) n'est inséré dans le support (18), au niveau des positions où les bras (22) constituent une tangente pour un élément lamellaire (40) dans le support (18), est légèrement inférieure au diamètre efficace de l'élément lamellaire (40).

11. Dispositif (10) selon l'une quelconque des revendications précédentes, comprenant une saillie (28) à partir d'au moins une des feuilles (12, 14) qui, en position fermée du dispositif (10), fait saillie dans l'intérieur creux espacé du dos (16) d'une distance plus grande que le diamètre efficace d'un élément lamellaire (40) à stocker.

12. Dispositif (10) selon l'une quelconque des revendications précédentes, dans lequel les bras (22) du support d'éléments lamellaires (18) comprennent une pluralité de rainures opposées (24, 26) destinées au stockage d'une pluralité d'éléments lamellaires (40).

13. Dispositif (10) selon l'une quelconque des revendications précédentes, dans lequel le dos (16) comprend une pluralité de supports d'éléments lamellaires (18).

14. Dispositif (10) selon l'une quelconque des revendications précédentes, dans lequel le dos (16) et les bras (22) sont moulés sous forme de partie solidaire.

15. Dispositif (10) selon l'une quelconque des revendications précédentes, dans lequel le dos (16), les bras (22) et les feuilles (12, 14) sont solidairement moulés.

16. Ensemble comprenant un dispositif de stockage de disques (10) selon l'une quelconque des revendications précédentes et un élément lamellaire (40) monté dans le support d'éléments lamellaires (18) ayant les parties de bord reçues dans les rainures opposées (24, 26) et retenues dans les rainures (24, 26) par les saillies opposées (28).
